# EUROPÄISCHE PATENTSCHRIFT

(11) **EP 3 504 462 B1**
(45) Veröffentlichungstag und Bekanntmachung des Hinweises auf die Patenterteilung: **16.07.2025**
(21) Anmeldenummer: 17757542.0
(22) Anmeldetag: 25.08.2017
(51) Int. Cl.: F16F 15/04, F16F 1/12

(54) **VORRICHTUNG ZUR SCHWINGUNGSISOLIERTEN AUFHÄNGUNG EINER LAST**
DEVICE FOR SUSPENDING A LOAD IN A VIBRATION-INSULATED MANNER
DISPOSITIF PERMETTANT DE SUSPENDRE UNE CHARGE DE MANIÈRE ISOLÉE PAR RAPPORT AUX VIBRATIONS

(30) Priorität: 26.08.2016 AT 507652016
(43) Veröffentlichungstag der Anmeldung: 03.07.2019
(73) Patentinhaber: Technische Universität Wien, 1040 Wien (AT)
(72) Erfinder: SCHMID, Michael, 1150 Wien (AT); SETVIN, Martin, 1070 Wien (AT); DIEBOLD, Ulrike, 1190 Wien (AT)
(74) Vertreter: KLIMENT & HENHAPEL
(86) Internationale Anmeldenummer: PCT/EP2017/071401
(87) Internationale Veröffentlichungsnummer: WO 2018/037102

(56) Entgegenhaltungen:
- EP-A2- 0 083 903
- JP-A- S61 112 839
- JP-U- H04 105 647
- JP-U- S58 157 874

## Beschreibung

### GEBIET DER ERFINDUNG

Die vorliegende Erfindung betrifft eine Vorrichtung zur schwingungsisolierten Aufhängung einer Last an mindestens einem Trägerelement, die Vorrichtung umfassend einen Basiskörper zur Aufnahme der Last, wobei der Basiskörper mehrere Befestigungsbereiche zur Befestigung elastischer Elemente aufweist, wobei die elastischen Elemente jeweils einen ersten Endbereich und einen zweiten Endbereich aufweisen und mit dem ersten Endbereich am Basiskörper befestigt sind, wobei der zweite Endbereich des jeweiligen elastischen Elements zu dessen Anbindung an das mindestens eine Trägerelement vorgesehen ist, wobei eine Regel- und Steuereinheit und zumindest ein Aktuator vorgesehen sind, wobei die Regel- und Steuereinheit derart ausgelegt ist, um in einem Betriebszustand der Vorrichtung eine, vorzugsweise vorgebbare, Lage des Basiskörpers und/oder der Last zu regeln.

### STAND DER TECHNIK

Insbesondere im Bereich der Forschung und Entwicklung existieren viele Anwendungen, bei denen Geräte möglichst ohne störende Vibrationen bzw. Schwingungen betrieben werden müssen. Beispielsweise ist die Schwingungsisolierung von hochauflösenden Elektronenmikroskopen, Rastersondenmikroskopen, optischen Tischen oder Nanotechnologie-Instrumenten ein häufiges Problem. Dabei müssen die Geräte von Schwingungen der jeweiligen Tragkonstruktion, z.B. des Gebäudes, in dem das jeweilige Gerät aufgestellt ist, isoliert werden.

Die Leistungsfähigkeit der Schwingungsisolierung wird dabei charakterisiert durch das Verhältnis der Schwingungsamplituden der Last, d.h. des jeweiligen Geräts, zu den Schwingungsamplituden der Tragkonstruktion als Funktion der Frequenz. Für Systeme, die im Wesentlichen als (vertikales) Feder-Massen-Systeme oder (horizontale) Pendelsysteme arbeiten, hängt die Leistungsfähigkeit der Schwingungsisolierung bei niedrigen Frequenzen hauptsächlich von der jeweiligen Resonanzfrequenz ab, wobei diese so gering wie möglich sein sollte.

Aus dem Stand der Technik sind unterschiedliche Arten der Schwingungsisolierung für Anwendungen bekannt, die höchste Leistungsfähigkeit erfordern. Die drei wichtigsten sollen hier kurz genannt werden.

Zum einen sind dies pneumatische Systeme, bei denen die Last letztlich an drei oder mehr Punkten mittels mit Druckluft beaufschlagter Membranen unterstützt wird. Typischerweise können auf diese Weise Resonanzfrequenzen von minimal 2 Hz erreicht werden, in seltenen Fällen kann die Resonanzfrequenz auf 1,5 Hz oder etwas kleinere Werte gedrückt werden. Eine Niveauregulierung, die insbesondere ein Waagrechthalten der Last erlaubt, ist durch steuerbare Ventile zur Regulierung des Luftdrucks möglich.

Eine Möglichkeit, tiefere Resonanzfrequenzen zu erzielen, stellt das Aufhängen der Last an relativ weichen elastischen Elementen, insbesondere an Gummiseilen, dar. Eine Niveauregulierung bzw. Lageregelung ist hier nicht bekannt, sodass eine Änderung der Massenverteilung der Last unweigerlich zu einer Lageänderung bzw. zu einem Verkippen der Last führt. Weiters führen auch unvermeidbare Alterungserscheinungen der elastischen Elemente bzw. der Gummiseile zu solchen Lageänderungen. Insbesondere die Handhabung schwerer Lasten ist somit extrem eingeschränkt, weshalb diese Art der Schwingungsisolierung nur für Lasten von maximal ca. 100 kg eingesetzt wird.

Schließlich ist die aktive Schwingungsisolierung bekannt, bei welcher Beschleunigungen der Tragkonstruktion und/oder der Last gemessen werden. Mittels Aktuatoren, durch welche die Last unterstützt wird, wird den gemessenen Beschleunigungen entgegengewirkt. Die Leistungsfähigkeit dieser Systeme wird jedoch bei tiefen Frequenzen durch Rauschen bzw. durch die Sensitivität der verfügbaren Beschleunigungssensoren begrenzt. Weiters ist die Regelung der Aktuatoren aufwendig und muss für unterschiedliche Lasten jeweils angepasst werden. Zudem ergeben sich in der Praxis häufig auch Probleme bei höheren Frequenzen von ca. 10 Hz bis 20 Hz, die mit dem Untergrund, auf dem die Schwingungsisolierung aufgebaut ist, zusammenhängen. Eine Niveauregulierung ist bei diesen Systemen grundsätzlich möglich, z.B. mittels pneumatischer Elemente. Aus der EP 0083903 A2 ist ein elastisches Lagerungselement mit einer Stellvorrichtung zur Aufstellung am Boden bekannt, wobei die Anordnung eines Turbogeneratorsatzes auf einer Fundamentplatte, die sich über Federkörper auf Fundamentstützen abstützt, offenbart wird.

Aus der JP H04 105647 U eine Vorrichtung zum Schutz einer tragenden Struktur bekannt. Stützen der Vorrichtung sind fest im Boden verankert und mit der Struktur über vorgespannte Federn verbunden, wobei für jede Stütze ein Rückhalteelement vorgesehen ist, das die Stütze mit der Struktur verbindet und gegen die Kraft der vorgespannten Feder die Struktur in fester Position zur Stütze hält. Wenn nun, z.B. aufgrund eines Erdbebens, Kräfte auftreten, die über einer maximalen Haltekraft des Rückhaltelements liegen, bricht bzw. reißt das Rückhaltelement an einer dafür vorgesehenen Sollbruchstelle und gibt die Verbindung zwischen Struktur und Stütze frei, sodass die Struktur dann auf den Federn schwingt und Beschädigungen der Struktur verhindert werden.

Aus der JP S61112839 ist eine elastische Stützvorrichtung, die eine Last aufnehmen kann, mit Mitteln zum Ändern der Vorspannung auf eine Feder.

### AUFGABE DER ERFINDUNG

Es ist daher Aufgabe der vorliegenden Erfindung eine Vorrichtung zur Schwingungsisolierung zur Verfügung zu stellen, die die oben genannten Nachteile vermeidet. Die erfindungsgemäße Vorrichtung soll dabei insbesondere für tiefe Resonanzfrequenzen ausgelegt sein, eine Niveauregulierung bzw. ein Waagrechthalten der Last ermöglichen und hohe Lasten zulassen.

### DARSTELLUNG DER ERFINDUNG

Zur Lösung der genannten Aufgabe ist es bei einer Vorrichtung zur schwingungsisolierten Aufhängung einer Last an mindestens einem Trägerelement, die Vorrichtung umfassend einen Basiskörper zur Aufnahme der Last, wobei der Basiskörper mehrere Befestigungsbereiche zur Befestigung elastischer Elemente aufweist, wobei die elastischen Elemente jeweils einen ersten Endbereich und einen zweiten Endbereich aufweisen und mit dem ersten Endbereich am Basiskörper befestigt sind, wobei der zweite Endbereich des jeweiligen elastischen Elements zu dessen Anbindung an das mindestens eine Trägerelement vorgesehen ist, wobei eine Regel- und Steuereinheit und zumindest ein Aktuator vorgesehen sind, wobei die Regel- und Steuereinheit derart ausgelegt ist, um in einem Betriebszustand der Vorrichtung eine, vorzugsweise vorgebbare, Lage des Basiskörpers und/oder der Last zu regeln, erfindungsgemäß vorgesehen, dass der mindestens eine Aktuator mit dem zweiten Endbereich von zumindest einem elastischen Element wirkverbunden ist, um eine vertikale Position des zweiten Endbereichs dieses zumindest einen elastischen Elements justieren zu können, wobei mindestens ein, vorzugsweise induktiver, Lagesensor vorgesehen ist, um durch Verarbeitung von Messsignalen des mindestens einen Lagesensors mittels der Regel- und Steuereinheit die Lage des Basiskörpers und/oder der Last zu bestimmen, wobei vorzugsweise drei Lagesensoren vorgesehen sind.

Unter Lage ist hier und im Folgenden die Orientierung bzw. Ausrichtung und/oder eine Höhe bzgl. einer Referenz, wie z.B. bzgl. mindestens eines Fixpunkts oder eines Bodens, zu verstehen.

Das mindestens eine Trägerelement kann z.B. direkt durch eine Decke eines Raumes, in dem die erfindungsgemäße Vorrichtung betrieben wird, ausgebildet sein oder durch einen oder mehrere Träger, die ihrerseits auf der Decke montiert sind. Weiters kann das mindestens eine Trägerelement z.B. durch einen oder mehrere Anschlagpunkte oder durch eine eigene Stützkonstruktion, an der die Vorrichtung aufgehängt werden kann, ausgebildet sein, wobei die Stützkonstruktion z.B. am Boden des Raumes aufgestellt sein kann.

Der Basiskörper stellt eine Halterung für die Last dar. Typischerweise kann die Last am Basiskörper fixiert werden, um einen sicheren Halt der Last am Basiskörper zu garantieren.

Der Basiskörper kann z.B. in Form eines geeigneten Gestells oder einer Plattform ausgebildet sein, die die Aufnahme bzw. Fixierung unterschiedlichster Lasten ermöglichen. Natürlich können das Gestell oder die Plattform auch speziell für die aufzunehmende Last ausgelegt und an diese in Form und/oder Dimensionierung angepasst sein.

Typischerweise wird die Last lösbar am Basiskörper befestigt. Es ist aber auch denkbar, dass der Basiskörper zumindest teilweise untrennbar mit der Last verbunden wird, beispielsweise durch Verschweißen.

Der Basiskörper kann auch aus mehreren separaten Teilen bestehen, die beispielsweise an unterschiedlichen Seiten der Last befestigt sind und insgesamt den Basiskörper ausbilden.

Bei einer bevorzugten Ausführungsform der erfindungsgemäßen Vorrichtung ist es vorgesehen, dass für jeden Befestigungsbereich eine Gruppe, welche mehrere der elastischen Elemente umfasst, vorgesehen ist, um den jeweiligen Befestigungsbereich mit dem mindestens einen Trägerelement zu verbinden, und dass der zumindest eine Aktuator mit dem zweiten Endbereich von zumindest einem elastischen Element von zumindest einer der Gruppen wirkverbunden ist.

Indem für jeden Befestigungsbereich eine Gruppe mit mehreren elastischen Elementen vorgesehen ist, kann jedes einzelne elastische Element für sich genommen sehr weich ausgelegt sein, was die Montage erleichtert, insbesondere wenn jedes der elastischen Elemente händisch gespannt werden kann. Zudem können sehr kostengünstige Standardteile als elastische Elemente verwendet werden. Insgesamt ist eine Dimensionierung somit auch für sehr große Lasten über 1000 kg problemlos möglich, wobei sehr niedrige Resonanzfrequenzen von unter 1 Hz erreicht werden können. Z.B. können mit ca. 2 m langen Gummiseilen als elastische Elemente typischerweise um die 0,8 Hz erreicht werden.

Durch den mindestens einen Aktuator wird die Möglichkeit geschaffen, die Lage bzw. Orientierung und Niveau der Last aktiv zu beeinflussen. Wiederum wirkt sich die Verwendung mehrerer elastischer Elemente pro Befestigungsbereich bzw. pro Gruppe vorteilhaft aus, da nicht zwangsweise alle elastischen Elemente mit dem mindestens einen Aktuator bewegt werden müssen, um die Lageänderung zu bewirken. Typischerweise können pro Gruppe einige elastische Elemente direkt mit dem mindestens einen Trägerelement verbunden werden, d.h. diese elastischen Elemente - im Folgenden auch als "fixe elastische Elemente" bezeichnet - verbinden den jeweiligen Befestigungsbereich direkt mit dem mindestens einen Trägerelement. Zur Lageregulierung werden nur die restlichen elastischen Elemente - im Folgenden auch als "bewegbare elastische Elemente" bezeichnet - der betreffenden Gruppe verwendet. Entsprechend schwach kann der Aktuator dimensioniert werden, was wiederum Kosten spart.

Zudem verursachen diese vergleichsweise kleinen bzw. schwachen Aktuatoren erfahrungsgemäß selbst weniger Vibrationen als größere bzw. stärker dimensionierte Aktuatoren.

Schließlich wird durch ein elastisches Element alleine bzw. durch einige wenige elastische Elemente weniger Kraft auf den Basiskörper bzw. die Last übertragen als durch mehrere elastische Elemente. Daher ermöglicht die genannte Ausführungsform eine deutliche Reduktion der vom mindestens einen Aktuator auf die Last übertragenen Vibrationen.

Typischerweise erfolgt die Auslegung der Vorrichtung an die gewünschte Last so, dass die fixen Elemente alleine gerade nicht ausreichen, um die Last zu unterstützen bzw. um die Last aufzuhängen. D.h. der Basiskörper würde nur mit den fixen Elementen alleine im Betriebszustand bei aufgenommener Last vom Boden oder sonstigen Fixpunkten, auf denen der Basiskörper aufliegt, nicht abheben. Erst durch die zusätzliche Federkraft des einen bewegbaren Elements oder der mehreren bewegbaren Elemente wird die Gewichtskraft von Last und Basiskörper überwunden und kann im Betriebszustand eine tatsächliche Aufhängung der Last erfolgen. Indem sodann die vertikale Position des zweiten Endbereichs des mindestens einen bewegbaren elastischen Elements mit dem mindestens einen Aktuator angehoben oder abgesenkt wird, wird der Basiskörper samt Last im Bereich des jeweiligen Befestigungsbereichs angehoben oder abgesenkt.

Entsprechend ist es bei einer bevorzugten Ausführungsform der erfindungsgemäßen Vorrichtung vorgesehen, dass zumindest für eine, bevorzugt für mindestens drei, besonders bevorzugt für jede, der Gruppen gilt, dass eine Zahl jener elastischen Elemente dieser Gruppe, die mit dem mindestens einen Aktuator wirkverbunden sind, kleiner ist als eine Gesamtzahl der elastischen Elemente dieser Gruppe.

Dabei ist es bei einer besonders bevorzugten Ausführungsform der erfindungsgemäßen Vorrichtung vorgesehen, dass die Zahl höchstens eins ist. Dies wird, wie gesagt, möglich, da das einzelne vom Aktuator bewegbare elastische Element nur eine relativ geringe Gewichtskraft aufnehmen muss und somit - ebenso wie der zugehörige Aktuator - entsprechend schwach dimensioniert werden kann. Der Herstellungsaufwand, die technische Komplexität sowie die Kosten der Vorrichtung reduzieren sich somit dramatisch.

Grundsätzlich ist es dabei auch denkbar, dass es eine oder mehrere Gruppen gibt, die nur fixe elastische Elemente und somit kein bewegbares elastisches Element aufweisen. Für diese Gruppe(n) ist die Zahl entsprechend null.

Um nicht nur ein einseitiges Verkippen der Last, sondern vorzugsweise tatsächlich eine Lageregelung der gesamten Last zu ermöglichen, ist es bei einer bevorzugten Ausführungsform der erfindungsgemäßen Vorrichtung vorgesehen, dass mehrere Aktuatoren für mehrere, bevorzugt für mindestens drei, besonders bevorzugt für alle, Gruppen vorgesehen sind. D.h. die Aktuatoren sind mit elastischen Elementen bzw. deren zweiten Endbereichen wirkverbunden, wobei nicht alle dieser elastischen Elemente derselben Gruppe, sondern zumindest teilweise unterschiedlichen Gruppen angehören. Diese Gruppen sollen nicht entlang einer Geraden am Basiskörper befestigt sein, sondern eine möglichst große Fläche aufspannen.

Es kann dabei auch ein Aktuator mit elastischen Elementen mehrerer Gruppen verbunden sein, d.h. einzelne Aktuatoren können auch für mehr als eine Gruppe vorgesehen sein. Grundsätzlich kann auch jeder Aktuator nur einer Gruppe zugeteilt sein, um die Lage der Last beeinflussen zu können. Sofern in allen Gruppen bewegbare elastische Elemente vorhanden sind, ist jedenfalls eine Lageregelung möglich. Insbesondere kann sodann der gesamte Basiskörper - und mit ihm die Last - in einer Höhe - gegenüber mindestens einem Fixpunkt, insbesondere gegenüber einem Boden, im Folgenden auch als Höhenlage bezeichnet - verstellt werden kann.

Um die Lage im Sinne von Orientierung und Niveau der Last vollständig einstellen bzw. verändern zu können, müssen in zumindest drei Gruppen bewegbare elastische Elemente vorhanden sein, wobei die vertikalen Positionen der zweiten Endbereiche dieser elastischen Elemente unabhängig voneinander mittels Aktuatoren bewegt werden können und wobei die betreffenden ersten Endbereiche der elastischen Elemente dieser zumindest drei Gruppen - bzw. die entsprechenden Befestigungsbereiche - eine Ebene aufspannen. Auf diese Weise ist z.B. eine Lagekompensation, die durch eine Änderung der Massenverteilung der Last oder durch Alterungserscheinungen der elastischen Elemente notwendig wird, problemlos möglich. Es sei bemerkt, dass lediglich zwei Aktuatoren ausreichen, um eine perfekt waagrechte Orientierung stets garantieren zu können. Soll die Höhe / das Niveau auch eingestellt werden können, sind drei Aktuatoren nötig.

In der Praxis ist es oft von Vorteil vier Befestigungsbereiche vorzusehen, die beispielsweise in Form eines Rechtecks zueinander angeordnet sein können, um z.B. einen bequemen Zugang zur aufgehängten Last zu gewährleisten. Daher ist es bei einer bevorzugten Ausführungsform der erfindungsgemäßen Vorrichtung vorgesehen, dass zumindest drei, vorzugsweise vier, Befestigungsbereiche vorgesehen sind.

Entsprechend dem oben Gesagten ist es bei einer bevorzugten Ausführungsform der erfindungsgemäßen Vorrichtung vorgesehen, dass genau drei Aktuatoren vorgesehen sind. Indem diese mit zweiten Endbereichen von bewegbaren elastischen Elementen wirkverbunden sind, welche zu Gruppen gehören, deren Befestigungsbereiche eine Ebene aufspannen, kann eine gewünschte Orientierung der Last, insbesondere eine perfekt waagrechte Orientierung, durch entsprechende Ansteuerung der einzelnen Aktuatoren eingestellt werden.

Sofern noch weitere Befestigungsbereiche vorhanden sind, deren Gruppen bewegbare elastische Elemente aufweisen, ist es denkbar, diese bewegbaren elastischen Elemente einem oder mehreren der drei Aktuatoren zuzuordnen, um neben der Orientierungseinstellung eine Niveauregulierung zu ermöglichen. Je nachdem wieviele zusätzliche elastische Elemente mit den einzelnen Aktuatoren wirkverbunden sind, müssen diese Aktuatoren ggf. entsprechend stärker dimensioniert werden.

Um besonders große Lasten von 1000 kg oder mehr mit der erfindungsgemäßen Vorrichtung aufhängen und dabei die Orientierung und/oder Höhenlage der Last einstellen zu können, ist es bei einer bevorzugten Ausführungsform der erfindungsgemäßen Vorrichtung vorgesehen, dass jeweils zwei bis zwanzig elastische Elemente pro Gruppe vorgesehen sind, wobei genau ein elastisches Element pro Gruppe mit dem mindestens einen Aktuator wirkverbunden ist. Dies schließt den Fall ein, dass zwanzig elastische Elemente pro Gruppe vorgesehen sind. Eine derartige Ausführungsform hat sich in der Praxis z.B. mit neun elastischen Elementen pro Gruppe und vier Gruppen bzw. Endbereichen bewährt.

Als elastische Elemente kommen grundsätzlich z.B. an sich bekannte Zugfedern, insbesondere aus Metall, in Frage. Alternativ hierzu können auch Gummiseile verwendet werden, die typischerweise einen weichen, nachgiebigen und dissipierend wirkenden Kern sowie einen weniger elastischen Mantel aufweisen. Beispiele für derartige Gummiseile mit dem geschilderten Aufbau sind aus unterschiedlichsten Bereichen der Technik bekannt. Beispielsweise werden solche Gummiseile in vielen Bereichen, u.a. auch im Haushalt, als Gummispanner eingesetzt. Insbesondere sind derlei Gummiseile mit dem geschilderten Aufbau als Bungee-Seile bekannt und kommerziell erhältlich.

Gegenüber Metallfedern weisen die Gummiseile bzw. Bungee-Seile eine Reihe von Vorteilen auf. Zum einen ist die Masse der Gummiseile bzw. Bungee-Seile typischerweise geringer als die Masse von in Frage kommenden Metallfedern gleicher Federkonstante und Belastbarkeit, was vergleichsweise höhere Resonanzfrequenzen eines einzelnen Gummiseils zur Folge hat. Die Ausdehnungscharakteristik, gegeben durch die Ableitung der Kraft F nach der Dehnung x, dF/dx, ist bei Gummiseilen bzw. Bungee-Seilen insofern besonders vorteilhaft, da sehr niedrige Resonanzfrequenzen im beim bestimmungsgemäßen Einsatz typischerweise erreichten Ausdehnungsbereich die Folge sind. Bzw. kann man die Seile so an die aufzuhängende Last bzw. die Belastung anpassen, dass sie in einem Bereich ihrer Kraft-Weg-Kennlinie verwendet werden, wo die Änderung der Kraft mit der Dehnung möglichst gering ist, d.h. wo die Seile möglichst weich sind und eine geringe Resonanzfrequenz resultiert.

Typischerweise liegt dieser Ausdehnungsbereich zwischen 20% und 80% Dehnung.

Zudem ergibt sich aufgrund der Materialeigenschaft der Gummiseile eine Dämpfung von Resonanzen der aufgehängten Last einerseits und der Eigenmoden, wie z.B. der Vibrationen der einzelnen Gummiseile bzw. Bungee-Seile, andererseits. Diese Dämpfung ist bei Gummiseilen deutlich besser als bei reinen Metallfedern.

Daher ist es bei einer bevorzugten Ausführungsform der erfindungsgemäßen Vorrichtung vorgesehen, dass die elastischen Elemente Gummiseile, insbesondere Bungee-Seile, umfassen und vorzugsweise vollständig durch Gummiseile, insbesondere Bungee-Seile, ausgebildet sind. Theoretisch wäre es auch denkbar die Gummiseile bzw. Bungee-Seile mit anderen elastischen Elementen zu kombinieren. Beispielsweise könnte nur ein Teil der elastischen Elemente durch Gummiseile bzw. Bungee-Seile ausgebildet sein und der Rest der elastischen Elemente durch Federn, insbesondere Metallfedern. Neben dieser theoretischen Möglichkeit einer Art Parallelschaltung von Gummiseilen und Federn wäre vor allem auch eine Art Serienschaltung denkbar, wo Gummiseile - oder allgemeiner Elemente aus Gummi- oder Elastomer-Materialien - und Federn hintereinander geschaltet sind. Die Gummiseile - bzw. Elemente aus Gummi- oder Elastomer-Materialien - können dabei aufgrund ihrer Materialeigenschaften insbesondere eine dämpfende Funktion übernehmen.

Im Hinblick auf die genannten Dämpfungseigenschaften kann allgemein festgehalten werden, dass sich besonders elastische Elemente anbieten, deren Material sowohl elastisch als auch dissipierend ist oder die eine Kombination von solchen Materialien aufweisen. Daher ist es bei einer bevorzugten Ausführungsform der erfindungsgemäßen Vorrichtung vorgesehen, dass die elastischen Elemente derart ausgelegt sind, dass sie ein dissipatives Verhalten aufweisen. Theoretisch könnte dies z.B. auch durch eine Kombination einer Metallfeder mit einem dämpfenden Element realisiert werden.

Bei einer bevorzugten Ausführungsform der erfindungsgemäßen Vorrichtung ist vorgesehen, dass der mindestens eine Aktuator durch mindestens einen Getriebemotor ausgebildet ist. Vorzugsweise sind alle Aktuatoren durch Getriebemotoren ausgebildet. Diese ermöglichen einen einfachen und kostengünstigen Aufbau der erfindungsgemäßen Vorrichtung. Grundsätzlich sind aber natürlich auch andere Aktuatoren denkbar, z.B. eine Kombination eines Elektromotors bzw. Getriebemotors mit einer Gewindespindel oder ein Hydraulikzylinder oder ein Pneumatikzylinder.

Um die vertikale Position des zweiten Endbereichs unterschiedlichster elastischer Elemente mit dem mindestens einen Getriebemotor im Betriebszustand bewegen bzw. justieren zu können, ist es bei einer bevorzugten Ausführungsform der erfindungsgemäßen Vorrichtung vorgesehen, dass zur Wirkverbindung zwischen dem mindestens einen Getriebemotor und dem zweiten Endbereich des mindestens einen elastischen Elements jeweils ein Band am zweiten Endbereich des jeweiligen elastischen Elements befestigt ist und dass für das jeweilige Band eine Spule vorgesehen ist, welche mit dem mindestens einen Getriebemotor verbunden und von diesem antreibbar ist, um das jeweilige Band auf die jeweilige Spule aufzuwickeln und/oder von dieser abzuwickeln. Die Formulierung "und/oder" ist dabei so zu verstehen, dass sowohl abgewickelt als auch aufgewickelt werden kann, wobei das Aufwickeln und das Abwickeln desselben Bands klarerweise nicht gleichzeitig erfolgen.

Um insbesondere auch bei den fixen elastischen Elementen eine, zumindest grobe, Anpassung der Länge an die jeweilige Anwendung, insbesondere Last, vornehmen zu können, ist es bei einer bevorzugten Ausführungsform der erfindungsgemäßen Vorrichtung vorgesehen, dass Verstellelemente vorgesehen sind, um eine Länge der elastischen Elemente, vorzugsweise manuell, einstellen zu können, wobei die Verstellelemente vorzugsweise nur für jene elastischen Elemente vorgesehen sind, die in keiner Wirkverbindung mit dem mindestens einen Aktuator stehen. Derlei Verstellelemente sind an sich bekannt. Diese Verstellelemente können z.B. für die Gummiseile als Seilklemmen oder für Metallfedern als Gewindespindeln ausgebildet sein. Natürlich können die Verstellelemente auch bei den bewegbaren elastischen Elementen vorgesehen sein.

### Bei der erfindungsgemäßen

Vorrichtung ist vorgesehen, dass mindestens ein, vorzugsweise induktiver, Lagesensor vorgesehen ist, um durch Verarbeitung von Messsignalen des mindestens einen Lagesensors mittels der Regel- und Steuereinheit die Lage des Basiskörpers und/oder der Last zu bestimmen, wobei vorzugsweise drei Lagesensoren vorgesehen sind. Induktive Lagesensoren, insbesondere Abstandssensoren, sind an sich bekannt und kostengünstig kommerziell erhältlich.

Der mindestens eine Lagesensor kann am Basiskörper oder direkt an der Last oder an einem Fixpunkt angeordnet sein.

Bei einer besonders bevorzugten Ausführungsform der erfindungsgemäßen Vorrichtung ist vorgesehen, dass als mindestens ein Lagesensor mindestens ein Abstandssensor vorgesehen ist, um im Betriebszustand einen Abstand zu mindestens einem Fixpunkt bestimmen und somit eine Fehllage des Basiskörpers und/oder der Last feststellen zu können, wobei vorzugsweise drei Abstandssensoren vorgesehen sind.

Der Abstandssensor dient also dazu, einen Abstand zwischen dem Fixpunkt und dem Basiskörper und/oder der Last zu bestimmen. Grundsätzlich misst der Abstandssensor den Abstand zwischen ihm und dem Fixpunkt (wenn der Abstandssensor am Basiskörper und/oder der Last angeordnet ist) oder dem Basiskörper bzw. der Last (wenn der Abstandssensor am Fixpunkt angeordnet ist). Indirekt wird dadurch natürlich auch der Abstand zwischen dem Basiskörper und/oder der Last zum Fixpunkt bestimmt. Bei bekannter Geometrie kann z.B. ein horizontaler Abstand herangezogen werden, um eine Verkippung des Basiskörpers / der Last festzustellen. Um auch ein falsches (Höhen-)Niveau des Basiskörpers / der Last feststellen zu können, wird vorzugsweise zumindest ein vertikaler Abstand gemessen.

Durch Feststellung einer Fehllage des Basiskörpers kann klarerweise auch unmittelbar eine Fehllage der Last mit hoher Genauigkeit festgestellt werden.

Wie bereits gesagt, kann eine Fehllage die Folge einer geänderten Massenverteilung der Last oder von Alterungserscheinungen der elastischen Elemente sein. Beispielsweise verlieren Gummiseile bzw. Bungee-Seile im Laufe der Zeit ihre Federkraft. Je nach konkret verwendetem Typ des Gummiseils bzw. Bungee-Seils kann die Alterung z.B. eine ca. 25%-ige Reduktion der Federkraft in einem Zeitraum von 10 Jahren zur Folge haben.

Auf Basis der festgestellten Fehlorientierung - insbesondere mittels der Lagesensoren, deren Messsignale von der Regel- und Steuereinheit verarbeitet werden - können die Aktuatoren entsprechend angesteuert werden, um die gewünschte Lage des Basiskörpers bzw. der Last wieder herzustellen. Dabei ist zu beachten, dass durch die Justage mittels der Aktuatoren nicht unnötige Vibrationen bzw. Schwingungen der Last verursacht werden. Daher ist es bei einer bevorzugten Ausführungsform der erfindungsgemäßen Vorrichtung vorgesehen, dass mit der Regel- und Steuereinheit eine Geschwindigkeit, mit der im Betriebszustand die vertikale Position des zweiten Endbereichs des zumindest einen elastischen Elements änderbar ist, kontrollier- und regelbar ist. Vorzugsweise ist die Steuereinheit dabei als Proportionalregler mit Totgang ausgelegt. D.h. es gibt einen kleinen Bereich rund um den Sollwert - wenn z.B. mit Abstandssensoren vertikale Abstände gemessen werden, dann handelt es sich um einen kleinen Bereich rund um den/die Sollwert(e) der vertikalen Abstände -, in dem die Aktuatoren, insbesondere Getriebemotoren, nicht zu arbeiten beginnen bzw. nicht anlaufen.

Ggf. kann außerdem ein Tiefpassfilter bei der Regel- und Steuereinheit vorgesehen sein, dessen Grenzfrequenz unterhalb der Resonanzfrequenz der Last an der Aufhängung (d.h. unterhalb der Resonanzfrequenz des Systems aus der erfindungsgemäßen Vorrichtung und der mit dieser aufgehängten Last) liegt. Damit wird verhindert, dass bei entsprechenden Schwingungen der Last die Aktuatoren unnötige Bewegungen der elastischen Elemente vornehmen und so womöglich die Schwingungen noch verstärken.

Wie bereits ausgeführt, ist die Regel- und Steuereinheit derart ausgelegt, um im Betriebszustand eine automatisierte Nachjustierung der gewünschten Orientierung und/oder Höhe bzw. eine automatisierte Lageregelung des Basiskörpers / der Last zu ermöglichen, d.h. die Orientierung bzw. Lage des Basiskörpers / der Last konstant zu halten. Üblicherweise wird die vorgegebene Orientierung waagrecht sein bzw. so, dass die Last waagrecht orientiert ist. Es kann aber auch Fälle geben, wo ein gewisse Verkippung der Last relativ zur horizontalen Ebene gewünscht ist und daher bewusst beibehalten, d.h. konstant gehalten, werden soll. Die Regel- und Steuereinheit ist dabei mit den Lagesensoren, insbesondere Abstandssensoren, verbunden und verarbeitet deren Messsignale bzw. Messdaten, um jede festgestellte Fehlorientierung der Last bzw. des Basiskörpers auszugleichen.

Es sei bemerkt, dass die Anzahl der Lagesensoren und die Anzahl der Aktuatoren nicht unbedingt gleich sein müssen.

Diesem Umstand kann Rechnung getragen werden, indem die Regel- und Steuereinheit als Mehrgrößenregler (auch als MIMO-Controller bezeichnet, wobei MIMO für "multiple input / mutlitple output" steht) ausgelegt ist. Zur Regelung der Aktuatoren werden in diesem Fall Linearkombinationen der Sensorsignale verwendet. Darüberhinaus kann es auch bei einer gleichen Anzahl von Lagesensoren und Aktuatoren vorkommen, dass das Sensorsignal eines Lagesensors nicht "direkt" einem Aktuator zugeordnet werden kann. Dies kann z.B. bei Abstandssensoren der Fall sein, die in anderen Bereichen als den Befestigungsbereichen angeordnet sind.

Um die Leistungsfähigkeit der erfindungsgemäßen Vorrichtung bezüglich der Schwingungsisolierung weiter zu verbessern, kann zusätzlich eine aktive Schwingungsisolierung vorgesehen werden. Dabei muss diese zusätzliche aktive Schwingungsisolierung die Last nicht tragen und kann daher entsprechend schwach dimensioniert sein. Entsprechend ist es bei einer bevorzugten Ausführungsform der erfindungsgemäßen Vorrichtung vorgesehen, dass mindestens ein Vibrationssensor vorgesehen ist, um im Betriebszustand Schwingungen des Basiskörpers und/oder der Last feststellen zu können, und dass mindestens ein, insbesondere durch eine Schwingspule ausgebildeter, zusätzlicher Aktuator vorgesehen ist, der zwischen mindestens einem Fixpunkt und dem Basiskörper angeordnet und mit diesen verbunden ist, um die festgestellten Schwingungen des Basiskörpers und/oder der Last auszugleichen.

Typischerweise können mehrere Vibrationssensoren und mehrere zusätzliche Aktuatoren eingesetzt werden. Z.B. ist es möglich, für jeden Freiheitsgrad des Basiskörpers bzw. der Last zumindest einen Vibrationssensor vorzusehen. Darüberhinaus können für jeden Freiheitsgrad des Basiskörpers bzw. der Last jeweils ein oder mehrere zusätzliche Aktuatoren vorgesehen sein. Insbesondere können auch für drei Punkte/Bereiche des Basiskörpers bzw. der Last jeweils drei zusätzliche Aktuatoren (einer pro Raumrichtung), also insgesamt neun zusätzliche Aktuatoren, vorgesehen sein.

Geeignete Vibrationssensoren sind an sich bekannt, wobei beispielsweise Seismometer oder Beschleunigungssensoren, die auch als Akzelerometer oder G-Sensoren bezeichnet werden, eingesetzt werden können. Der mindestens eine Vibrationssensor ist vorzugsweise am Basiskörper und/oder an der Last befestigt oder direkt mit dem Basiskörper und/oder der Last verbunden. Indem Vibrationen des Basiskörpers festgestellt werden können, können auch unmittelbar Vibrationen der Last festgestellt werden. Geeignete Schwingspulen sind ebenfalls an sich bekannt, wobei diese u.a. auch als "voice coils" bezeichnet werden.

Theoretisch kann die Regel- und Steuereinheit dafür ausgelegt sein, um zusätzlich die Signale des mindestens einen Vibrationssensors zu verarbeiten und die mindestens eine Schwingspule bzw. den mindestens einen zusätzlichen Aktuator entsprechend anzusteuern. Vorzugsweise ist jedoch eine zusätzliche Regel- und Steuereinheit vorgesehen, die die Daten des mindestens einen Vibrationssensors auswertet und den mindestens einen zusätzlichen Aktuator entsprechend ansteuert. Dabei kann auch auf an sich bekannte Algorithmen für die entsprechende Regelung zurückgegriffen werden.

Analog zum oben Gesagten ist erfindungsgemäß auch ein System vorgesehen, umfassend eine Last, die mittels einer erfindungsgemäßen Vorrichtung am mindestens einen Trägerelement aufgehängt ist. Die erfindungsgemäße Vorrichtung befindet sich dabei vorzugsweise im Betriebszustand.

Bei einer bevorzugten Ausführungsform des erfindungsgemäßen Systems ist vorgesehen, dass die elastischen Elemente durch Gummiseile, insbesondere Bungee-Seile, ausgebildet sind, wobei in jeder Gruppe zumindest ein Gummiseil so verläuft, dass es mit der Vertikalen einen Winkel ungleich 0°, vorzugsweise einen Winkel im Bereich von 3° bis 30°, einschließt. Dies reduziert den Gütefaktor für (horizontale) Pendelvibrationen, deren Dämpfung sonst deutlich geringer ausfällt, da vertikale Gummiseile bzw. Bungee-Seile bei Pendelvibrationen ihre Länge im Wesentlichen nicht ändern.

Um den Gütefaktor für Pendelvibrationen besonders stark herabzusetzen, ist es bei einer besonders bevorzugten Ausführungsform des erfindungsgemäßen Systems vorgesehen, dass mindestens die Hälfte der Gummiseile jeder Gruppe derart verläuft, dass die Gummiseile mit der Vertikalen einen Winkel ungleich 0°, vorzugsweise einen Winkel im Bereich von 3° bis 30°, einschließen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Seitenansicht einer Ausführungsform einer erfindungsgemäßen Vorrichtung in einem Betriebszustand
- Fig. 2: eine schematische Seitenansicht einer weiteren Ausführungsform der erfindungsgemäßen Vorrichtung im Betriebszustand, wobei gegenüber der Ausführungsform der Fig. 1 eine zusätzliche aktive Schwingungsisolierung realisiert ist
- Fig. 3: eine schematische Detailansicht einer Wirkverbindung zwischen einem Aktuator und einem elastischen Element der erfindungsgemäßen Vorrichtungen aus Fig. 1 und Fig. 2

### WEGE ZUR AUSFÜHRUNG DER ERFINDUNG

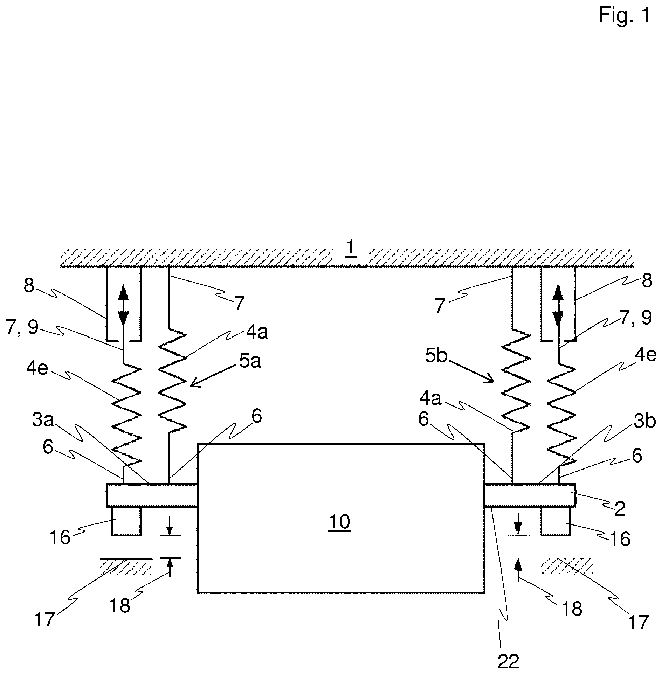

In Fig. 1 ist eine Ausführungsform einer erfindungsgemäßen Vorrichtung zur schwingungsisolierten Aufhängung einer Last 10 in einer schematischen Seitenansicht dargestellt. Die Last 10 ist dabei an einem Trägerelement 1, das in Fig. 1 durch eine Decke eines Raums ausgebildet ist, aufgehängt.

Die Vorrichtung ist in einem Betriebszustand gezeigt.

Die Vorrichtung und die mittels der Vorrichtung am Trägerelement 1 aufgehängte Last 10 sind Teil eines erfindungsgemäßen Systems.

Zur Aufnahme der Last 10 weist die Vorrichtung einen Basiskörper 2 auf, der im gezeigten Ausführungsbeispiel durch ein Gestell ausgebildet ist, welches an zumindest zwei Seiten der Last 10 mit dieser, z.B. durch Verschraubung, verbunden ist.

Der Basiskörper 2 weist im gezeigten Ausführungsbeispiel vier Befestigungsbereiche - jeweils einen in einem Eckbereich des Basiskörpers 2, wobei die Eckbereiche in Form eines Rechtecks zueinander angeordnet sind - auf, wobei in der Seitenansicht der Fig. 1 nur zwei Befestigungsbereiche 3a, 3b sichtbar sind. Jeweils drei aller Befestigungsbereiche spannen dabei eine Ebene auf. Sofern nicht explizit anderes angegeben ist, wird im Folgenden mit dem Verweis auf die Befestigungsbereiche 3a, 3b auf alle vier Befestigungsbereiche Bezug genommen.

Jedem Befestigungsbereich 3a, 3b ist eine Gruppe 5a, 5b - insgesamt sind also vier Gruppen vorhanden - von jeweils mehreren elastischen Elementen zugeordnet, wobei aus Gründen der Übersichtlichkeit in Fig. 1 nur jeweils zwei elastische Elemente pro Gruppe 5a, 5b eingezeichnet sind. Es können aber pro Gruppe 5a, 5b auch mehr, beispielsweise neun, elastische Elemente vorgesehen sein.

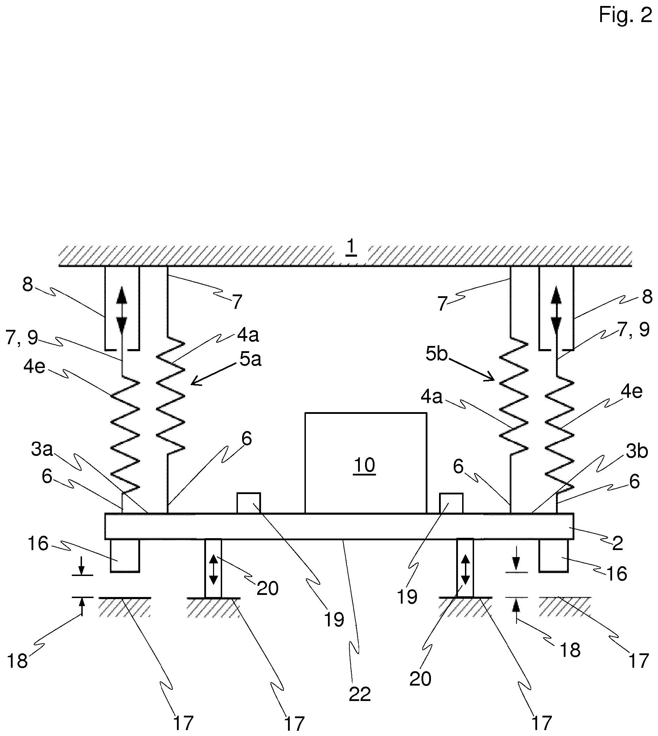

Die elastischen Elemente sind durch Gummiseile 4a, 4e ausgebildet, deren Aufbau im Wesentlichen jenem von Bungee-Seilen entspricht und die kommerziell erhältlich sind. Um deren elastische Eigenschaften anzudeuten, sind die Gummiseile 4a, 4e in Fig. 1 und Fig. 2 durch Zick-Zack-Linien dargestellt.

Die Gummiseile 4a, 4e weisen jeweils einen ersten Endbereich 6 auf, mit dem die Gummiseile 4a, 4e in den Befestigungsbereichen 3a, 3b mit dem Basiskörper 2 verbunden sind. Hierbei können zur Befestigung Verstellelemente (nicht dargestellt) vorgesehen sein, um eine Länge der Gummiseile 4a, 4e einstellen zu können. Die Verstellelemente können dabei z.B. als Klemmen ausgebildet sein.

Die Gummiseile 4a, 4e weisen außerdem einen zweiten Endbereich 7 auf, der zur Anbindung an das Trägerelement 1 vorgesehen ist. Entsprechend verbinden die Gummiseile 4a, 4e die Befestigungsbereiche 3a, 3b bzw. den Basiskörper 2 grundsätzlich mit dem Trägerelement 1. In Fig. 1 sind die zweiten Endbereiche 7 der Gummiseile 4a direkt mit dem Trägerelement 1 verbunden.

Die zweiten Endbereiche 7 der Gummiseile 4e sind hingegen mit Aktuatoren, die durch Getriebemotoren 8 ausgebildet sind, wirkverbunden. In Fig. 1 ist für jedes der Gummiseile 4e ein eigener Getriebemotor 8 vorgesehen, wobei die Getriebemotoren 8 unabhängig voneinander mittels einer Regel- und Steuereinheit (nicht dargestellt) angesteuert werden können.

Somit kann mit jedem der Getriebemotoren 8, die wiederum mit dem Trägerelement 1 verbunden sind, eine vertikale Position 9 des zweiten Endbereichs 7 des mit dem Getriebemotor 8 wirkverbundenen Gummiseils 4e justiert bzw. bewegt werden.

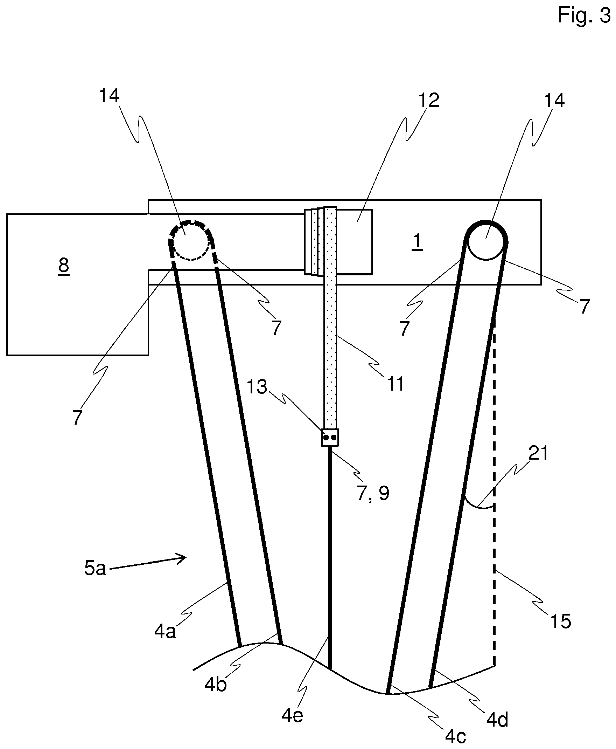

Fig. 3 illustriert schematisch in einer Detailansicht eine solche Wirkverbindung zwischen Getriebemotor 8 und Gummiseil 4e der Gruppe 5a, wobei in diesem Fall das Trägerelement 1 durch einen Stahlträger ausgebildet ist, der seinerseits z.B. an der Decke montiert sein kann. Der Getriebemotor 8 ist mit dem Trägerelement 1 verbunden, beispielsweise durch Verschraubung.

In der Darstellung der Fig. 3 sind neben den Gummiseilen 4a, 4e weitere drei Gummiseile 4b, 4c, 4d eingezeichnet. Es können auch noch mehr elastische Elemente vorgesehen sein. Z.B. können auch noch vier weitere Gummiseile vorgesehen, die wie die Gummiseile 4a, 4b, 4c, 4d ausgebildet und am Träger 1 befestigt sind. Diese wären allerdings in einer Richtung normal auf die Zeichenebene und aus der Zeichenebene herausragend gesehen nach den Gummiseilen 4a, 4b, 4c, 4d, 4e angeordnet und daher in Fig. 3 nicht dargestellt.

Im dargestellten Ausführungsbeispiel sind die Gummiseile 4a, 4b durch Abschnitte eines einzigen Gummiseils ausgebildet, das an einer Umlenkrolle 14 umläuft, die am Trägerelement 1 befestigt ist. Diese Umlenkrolle 14 ist in Fig. 3 durch den Getriebemotor 8 verdeckt und daher nur strichliert eingezeichnet, ebenso wie die durch den Getriebemotor 8 verdeckten Abschnitte der Gummiseile 4a, 4b. Analog sind die Gummiseile 4c, 4d durch Abschnitte eines einzigen Gummiseils ausgebildet, das an einer Umlenkrolle 14 umläuft, die ebenfalls am Trägerelement 1 befestigt ist. Die Umlenkrollen 14 sind am Trägerelement 1 drehbar gelagert.

Zur Wirkverbindung zwischen dem zweiten Endbereich 7 des Gummiseils 4e und dem Getriebemotor 8 ist ein Band 11 vorgesehen, das mittels des Getriebemotors 8 von einer Spule 12, die mit dem Getriebemotor 8 verbunden und von diesem antreibbar ist, abgewickelt bzw. auf diese Spule 12 aufgewickelt werden kann. Das Band 11 ist mittels eines Verbindungselements 13, das insbesondere als Klemme ausgebildet sein kann, mit dem zweiten Endbereich 7 des Gummiseils 4e verbunden. Entsprechend wird durch das Auf- und Abwickeln des Bands 11 die vertikale Position 9 des zweiten Endbereichs 7 des Gummiseils 4e verändert.

Pro Gruppe 5a, 5b wird also mittels der Getriebemotoren 8 nur das jeweilige Gummiseil 4e bewegt. Die gezeigten Ausführungsbeispiele der Vorrichtung sind dabei so ausgelegt, dass die Gummiseile 4a, 4b, 4c, 4d - bzw. jene Gummiseile, die nicht mit den Getriebemotoren 8 wirkverbunden sind, d.h. alle Gummiseile bis auf die Gummiseile 4e - alleine nicht ausreichen, um die Last 10 samt Basiskörper 2 zu unterstützen bzw. am Trägerelement 1 aufzuhängen. D.h. der Basiskörper 2 würde ohne die Gummiseile 4e am Boden oder sonstigen Fixpunkten 17 aufliegen und nicht abheben bzw. wären Abstände 18 zwischen den Fixpunkten 17 und induktiven Abstandssensoren 16, die auf einer Unterseite 22 des Basiskörpers 2 angebracht sind, geringer als zugehörige Sollwerte. Erst durch die zusätzliche Federkraft der Gummiseile 4e wird die Gewichtskraft von Last 10 und Basiskörper 2 überwunden und kann im Betriebszustand eine tatsächliche Aufhängung der Last 10 derart erfolgen, dass die Abstände 18 den gewünschten Sollwerten entsprechen. Indem sodann die vertikalen Positionen 9 der zweiten Endbereiche 7 der Gummiseile 4e mit den Getriebemotoren 8 angehoben oder abgesenkt werden, wird der Basiskörper 2 samt Last 10 im Bereich der Befestigungsbereiche 3a, 3b angehoben oder abgesenkt. Entsprechend schwach können die Getriebemotoren 8 dimensioniert werden, was wiederum Kosten spart. Zudem verursachen diese vergleichsweise kleinen bzw. schwachen Getriebemotoren 8 erfahrungsgemäß selbst weniger Vibrationen als größere bzw. stärker dimensionierte Getriebemotoren 8. Weiters können die Vibrationen jedes Getriebemotors 8 auch nur durch jeweils eines der Gummiseile 4 übertragen werden, wobei die Kraftübertragung auf die Last 10 deutlich geringer ist, als wenn die Kraftübertragung durch alle Gummiseile 4a, 4b, 4c, 4d, 4e stattfinden würde. Entsprechend unproblematisch ist daher z.B. das Anlaufen der Getriebemotoren 8.

Konkret können z.B. zur schwingungsisolierten Aufhängung einer Last 10 von ca. 1000 kg mit einem Basiskörper 2 von ca. 100 kg problemlos Gummiseile verwendet werden, die bei einer angreifenden (Gewichts-)Kraft von 300 N eine Dehnung von rund 30% aufweisen und somit in einem empfohlenen Ausdehnungsbereich von 20% bis 80% arbeiten, wenn vier Gruppen 5a, 5b zu je neun Gummiseilen 4a, 4b, 4c, 4d, 4e mit jeweils 2 m Länge vorgesehen sind. Auf diese Weise lassen sich (vertikale) Resonanzfrequenzen des Systems realisieren, die im Bereich von 0,8 Hz liegen. Entsprechend gut ist die Last 10 gegen Schwingungen in vertikaler Richtung, d.h. parallel zur Vertikalen 15 (vgl. Fig. 3) isoliert.

Um auch eine gewisse Dämpfung von horizontalen - also normal auf die Vertikale 15 stehenden - Pendelvibrationen zu bewirken, sind in den gezeigten Ausführungsbeispiel in jeder Gruppe 5a, 5b alle Gummiseile außer dem mit dem Getriebemotor 8 wirkverbundenen Gummiseil 4e schräg zur Vertikalen 15 angeordnet. Entsprechend schließen die Gummiseile 4a, 4b, 4c, 4d in Fig. 3 mit der Vertikalen 15 einen Winkel 21 ein, der ungleich 0°, vorzugsweise im Bereich von 3° bis 30°, ist. Auf diese Weise wird der Gütefaktor des Systems für Pendelvibrationen herabgesetzt.

In den dargestellten Ausführungsbeispielen sind drei Abstandssensoren 16 vorgesehen, die im Bereich der Befestigungsbereiche 3a, 3b auf der Unterseite 22 des Basiskörpers 2 angeordnet sind. Im Bereich der Befestigungsbereiche 3a ist einer der drei Abstandssensoren 16 zentral zwischen den beiden Befestigungsbereichen 3a am Basiskörper 2 angeordnet. Die anderen beiden Abstandssensoren 16 sind jeweils im Bereich eines der beiden Befestigungsbereiche 3b angeordnet. Aufgrund der schematischen Seitendarstellung der Fig. 1 und Fig. 2 sind jedoch jeweils nur zwei der Abstandssensoren 16 sichtbar.

Die Abstandssensoren 16 messen den Abstand 18 zwischen dem jeweiligen Abstandssensor 16 und dem zugehörigen Fixpunkt 17, womit hierdurch natürlich auch ein Abstand zwischen dem Basiskörper 2 und dem jeweiligen Fixpunkt 17 bestimmt wird. Entsprechend kann auch die Lage, insbesondere die Orientierung und das (vertikale) Niveau, bzw. eine mögliche Fehllage des Basiskörpers 2 und damit der Last 10 festgestellt werden, wobei im dargestellten Ausführungsbeispiel eine Verdrehung um die Vertikale 15 nicht erfasst wird.

Da für jeden Befestigungsbereich 3a, 3b jeweils eines der mit einem der Getriebemotoren 8 bewegbaren Gummiseile 4e vorgesehen ist, kann die Lage gezielt eingestellt und können Fehllagen sofort und hochpräzise ausgeglichen werden, um die gewünschte Lage des Basiskörpers 2 bzw. der Last 10 konstant beizubehalten. Hierzu wertet die Regel- und Steuereinheit die Messsignale bzw. Messdaten aller Abstandssensoren 16 laufend aus und steuert bei einer festgestellten Fehllage des Basiskörpers 2 bzw. der Last 10 die Getriebemotoren 8 entsprechend an, um die gewünschte Lage wieder herzustellen. Konkret werden dabei alle Getriebemotoren 8 so angesteuert, dass die Abstände 18 Werte annehmen, die einer gewünschten Orientierung bei einem gewünschten (vertikalen) Niveau des Basiskörpers 2 bzw. der Last 10 bezogen auf die Fixpunkte 17, die insbesondere am Boden angeordnet sein können, entspricht. Typischerweise ist der jeweilige Abstand 18 in der Praxis relativ klein, z.B. im Bereich von 1 mm bis 10 mm. Somit ist also eine automatische Lageregelung verwirklicht.

Um die Leistungsfähigkeit der erfindungsgemäßen Vorrichtung bzw. des erfindungsgemäßen Systems bezüglich der Schwingungsisolierung weiter zu verbessern, kann zusätzlich eine aktive Schwingungsisolierung vorgesehen werden, wie in Fig. 2 illustriert. Diese zusätzliche aktive Schwingungsisolierung muss die Last 10 nicht tragen und kann daher entsprechend schwach dimensioniert sein.

Hierbei sind im dargestellten Ausführungsbeispiel mehrere Vibrationssensoren 19 vorgesehen, um Schwingungen des Basiskörpers 2 und damit der Last 10 feststellen zu können, wobei in Fig. 2 zwei Vibrationssensoren 19 dargestellt sind. Diese Vibrationssensoren 19 sind direkt am Basiskörper 2 montiert und können beispielsweise jeweils durch ein Seismometer oder Akzelerometer ausgebildet sein.

Weiters sind zusätzliche Aktuatoren vorgesehen, um die festgestellten Schwingungen des Basiskörpers 2 auszugleichen. Im gezeigten Ausführungsbeispiel sind die zusätzlichen Aktuatoren durch Schwingspulen 20 ausgebildet, wobei in Fig. 2 zwei Schwingspulen 20 dargestellt sind. Die Schwingspulen 20 sind jeweils zwischen einem Fixpunkt 17, der einen Teil des Bodens ausbilden kann, und dem Basiskörper 2 angeordnet und mit diesen verbunden. Die Verbindung ist dabei natürlich nicht starr, was in Fig. 2 durch die Doppelpfeile bei den Schwingspulen 20 angedeutet ist.

Die Messsignale bzw. Messdaten der Vibrationssensoren 19 werden vorzugsweise von einer zusätzlichen Regel- und Steuereinheit (nicht dargestellt) ausgewertet. Die zusätzliche Regel- und Steuereinheit steuert hierauf die Schwingspulen 20 entsprechend an, um die festgestellten Schwingungen des Basiskörpers 2 und damit der Last 10 auszugleichen.

Abgesehen von der aktiven Schwingungsisolierung ist der Basiskörper 2 in Fig. 2 nicht als Gestell, sondern als Plattform ausgeführt, auf der die Last 10 angeordnet ist. Die Ausgestaltung des Basiskörpers 2 hängt dabei vom Vorhandensein einer zusätzlichen aktiven Schwingungsisolierung grundsätzlich nicht ab. D.h. ein Basiskörper 2 in Form einer Plattform ist auch ohne zusätzliche aktive Schwingungsisolierung möglich; ebenso ist ein Basiskörper 2 in Form eines Gestells bei Vorhandensein einer zusätzlichen aktiven Schwingungsisolierung möglich.

### BEZUGSZEICHENLISTE

- 1: Trägerelement
- 2: Basiskörper
- 3a,b: Befestigungsbereich
- 4a,b,c,d,e: Gummiseil
- 5a,b: Gruppe von Gummiseilen
- 6: Ester Endbereich des Gummiseils
- 7: Zweiter Endbereich des Gummiseils
- 8: Getriebemotor
- 9: Vertikale Position
- 10: Last
- 11: Band
- 12: Spule
- 13: Verbindungselement
- 14: Rolle
- 15: Vertikale
- 16: Abstandssensor
- 17: Fixpunkt
- 18: Abstand zwischen Abstandssensor und Fixpunkt
- 19: Vibrationssensor
- 20: Schwingspule
- 21: Winkel
- 22: Unterseite des Basiskörpers

## Patentansprüche

1. Vorrichtung zur schwingungsisolierten Aufhängung einer Last (10) an mindestens einem Trägerelement (1), die Vorrichtung umfassend einen Basiskörper (2) zur Aufnahme der Last (10), wobei der Basiskörper (2) mehrere Befestigungsbereiche (3a,3b) zur Befestigung elastischer Elemente (4a,4b,4c,4d,4e) aufweist, wobei die elastischen Elemente (4a,4b,4c,4d,4e) jeweils einen ersten Endbereich (6) und einen zweiten Endbereich (7) aufweisen und mit dem ersten Endbereich (6) am Basiskörper (2) befestigt sind, wobei der zweite Endbereich (7) des jeweiligen elastischen Elements (4a,4b,4c,4d,4e) zu dessen Anbindung an das mindestens eine Trägerelement (1) vorgesehen ist, wobei eine Regel- und Steuereinheit und zumindest ein Aktuator (8) vorgesehen sind, wobei die Regel- und Steuereinheit derart ausgelegt ist, um in einem Betriebszustand der Vorrichtung eine, vorzugsweise vorgebbare, Lage des Basiskörpers (2) und/oder der Last (10) zu regeln, **dadurch gekennzeichnet, dass** der mindestens eine Aktuator (8) mit dem zweiten Endbereich (7) von zumindest einem elastischen Element (4e) wirkverbunden ist, um eine vertikale Position (9) des zweiten Endbereichs (7) dieses zumindest einen elastischen Elements (4e) justieren zu können, wobei mindestens ein, vorzugsweise induktiver, Lagesensor (16) vorgesehen ist, um durch Verarbeitung von Messsignalen des mindestens einen Lagesensors mittels der Regel- und Steuereinheit die Lage des Basiskörpers (2) und/oder der Last (10) zu bestimmen, wobei vorzugsweise drei Lagesensoren (16) vorgesehen sind.

2. Vorrichtung nach Anspruch 1, **dadurch gekennzeichnet, dass** für jeden Befestigungsbereich (3a,3b) eine Gruppe (5a,5b), welche mehrere der elastischen Elemente (4a,4b,4c,4d,4e) umfasst, vorgesehen ist, um den jeweiligen Befestigungsbereich (3a,3b) mit dem mindestens einen Trägerelement (1) zu verbinden, und dass der zumindest eine Aktuator (8) mit dem zweiten Endbereich (7) von zumindest einem elastischen Element (4e) von zumindest einer der Gruppen (5a,5b) wirkverbunden ist.

3. Vorrichtung nach Anspruch 2, **dadurch gekennzeichnet, dass** mehrere Aktuatoren (8) für mehrere, bevorzugt für mindestens drei, besonders bevorzugt für alle, Gruppen (5a, 5b) vorgesehen sind.

4. Vorrichtung nach einem der Ansprüche 2 bis 3, **dadurch gekennzeichnet, dass** zumindest für eine, bevorzugt für mindestens drei, besonders bevorzugt für jede, der Gruppen (5a, 5b) gilt, dass eine Zahl jener elastischen Elemente (4e) dieser Gruppe (5a;5b), die mit dem mindestens einen Aktuator (8) wirkverbunden sind, kleiner ist als eine Gesamtzahl der elastischen Elemente (4a,4b,4c,4d,4e) dieser Gruppe (5a;5b).

5. Vorrichtung nach Anspruch 4, **dadurch gekennzeichnet, dass** die Zahl höchstens eins ist.

6. Vorrichtung nach einem der Ansprüche 1 bis 5, **dadurch gekennzeichnet, dass** die elastischen Elemente (4a,4b,4c,4d,4e) derart ausgelegt sind, dass sie ein dissipatives Verhalten aufweisen.

7. Vorrichtung nach Anspruch 6, **dadurch gekennzeichnet, dass** die elastischen Elemente Gummiseile (4a,4b,4c,4d,4e), insbesondere Bungee-Seile, umfassen und vorzugsweise vollständig durch Gummiseile (4a,4b,4c,4d,4e), insbesondere Bungee-Seile, ausgebildet sind.

8. Vorrichtung nach einem der Ansprüche 1 bis 7, **dadurch gekennzeichnet, dass** der mindestens eine Aktuator durch mindestens einen Getriebemotor (8) ausgebildet ist, dass zur Wirkverbindung zwischen dem mindestens einen Getriebemotor (8) und dem zweiten Endbereich (7) des mindestens einen elastischen Elements (4e) jeweils ein Band (11) am zweiten Endbereich (7) des jeweiligen elastischen Elements (4e) befestigt ist und dass für das jeweilige Band (11) eine Spule (12) vorgesehen ist, welche mit dem mindestens einen Getriebemotor (8) verbunden und von diesem antreibbar ist, um das jeweilige Band (11) auf die jeweilige Spule (12) aufzuwickeln und/oder von dieser abzuwickeln.

9. Vorrichtung nach einem der Ansprüche 1 bis 8, **dadurch gekennzeichnet, dass** Verstellelemente vorgesehen sind, um eine Länge der elastischen Elemente (4a,4b,4c,4d,4e), vorzugsweise manuell, einstellen zu können, wobei die Verstellelemente vorzugsweise nur für jene elastischen Elemente (4a,4b,4c,4d) vorgesehen sind, die in keiner Wirkverbindung mit dem mindestens einen Aktuator (8) stehen.

10. Vorrichtung nach einem der Ansprüche 1 bis 9, **dadurch gekennzeichnet, dass** als mindestens ein Lagesensor mindestens ein Abstandssensor (16) vorgesehen ist, um im Betriebszustand einen Abstand (18) zu mindestens einem Fixpunkt (17) bestimmen und somit eine Fehllage des Basiskörpers (2) und/oder der Last (10) feststellen zu können, wobei vorzugsweise drei Abstandssensoren (16) vorgesehen sind.

11. Vorrichtung nach einem der Ansprüche 1 bis 10, **dadurch gekennzeichnet, dass** mit der Regel- und Steuereinheit eine Geschwindigkeit, mit der im Betriebszustand die vertikale Position (9) des zweiten Endbereichs (7) des zumindest einen elastischen Elements (4e) änderbar ist, kontrollier- und regelbar ist.

12. Vorrichtung nach einem der Ansprüche 1 bis 11, **dadurch gekennzeichnet, dass** mindestens ein Vibrationssensor (19) vorgesehen ist, um im Betriebszustand Schwingungen des Basiskörpers (2) und/oder der Last (10) feststellen zu können, und dass mindestens ein, insbesondere durch eine Schwingspule (20) ausgebildeter, zusätzlicher Aktuator vorgesehen ist, der zwischen mindestens einem Fixpunkt (17) und dem Basiskörper (2) angeordnet und mit diesen verbunden ist, um die festgestellten Schwingungen des Basiskörpers (2) und/oder der Last (10) auszugleichen.

13. System umfassend eine Last (10), die mittels einer Vorrichtung nach einem der Ansprüche 1 bis 12 am mindestens einen Trägerelement (1) aufgehängt ist.

14. System nach Anspruch 13, **dadurch gekennzeichnet, dass** die elastischen Elemente durch Gummiseile (4a,4b,4c,4d,4e), insbesondere Bungee-Seile, ausgebildet sind, wobei in jeder Gruppe (5a,5b) zumindest ein Gummiseil (4a,4b,4c,4d) so verläuft, dass es mit der Vertikalen (15) einen Winkel (21) ungleich 0°, vorzugsweise einen Winkel (21) im Bereich von 3° bis 30°, einschließt.

## Claims

1. Device for vibration-isolated suspension of a load (10) on at least one support element (1), the device comprising a base element (2) for accepting the load (10), where the base element (2) comprises a plurality of attachment regions (3a, 3b) for attachment of elastic elements (4a, 4h, 4c, 4d, 4e), where each of the elastic elements (4a, 4b, 4c, 4d, 4e) has a first end region (6) and a second end region (7) and is attached by the first end region (6) to the base element (2), where the second end region (7) of the relevant elastic element (4a, 4b, 4c, 4d, 4e) is provided for its attachment to the at least one support element (1), where a regulating and control unit and at least one actuator (8) are provided, where the regulating and control unit is designed to regulate in an operating state of the device a, preferably settable, position of the base element (2) and/or of the load (10), **characterised in that** the at least one actuator (8) is operatively connected to the second end region (7) of at least one elastic element (4e), in order to be able to adjust a vertical position (9) of the second end region (7) of said at least one elastic element (4e), where at least one, preferably inductive, position sensor (16) is provided in order to determine the position of the base element (2) and/or of the load (10) by processing measurement signals from the at least one position sensor by means of the regulating and control unit, where preferably three position sensors (16) are provided.

2. Device according to claim 1, **characterized in that** a group (5a, 5b), which comprises a plurality of the elastic elements (4a, 4b, 4c, 4d, 4e), is provided for each attachment region (3a, 3b), in order to connect the relevant attachment region (3a, 3b) to the at least one support element (1), and that the at least one actuator (8) is operatively connected to the second end region (7) of at least one elastic element (4e) of at least one of the groups (5a, 5b).

3. Device according to claim 2, **characterized in that** a plurality of actuators (8) are provided for a plurality, preferably for at least three, especially preferably for all, groups (5a, 5b).

4. Device according to one of claims 2 to 3, **characterized in that** at least for one, preferably for at least three, especially preferably for each of the groups (5a, 5b), a number of those elastic elements (4e) of said group (5a; 5b), which are operatively connected to the at least one actuator (8), is less than a total number of the elastic elements (4a, 4b, 4c, 4d, 4e) of said group (5a; 5b).

5. Device according to claim 4, **characterized in that** the number is a maximum of one.

6. Device according to one of claims 1 to 5, **characterized in that** the elastic elements (4a, 4b, 4c, 4d, 4e) are designed so that they have a dissipative behavior.

7. Device according to claim 6, **characterized in that** the elastic elements comprise rubber cords (4a, 4b, 4c, 4d, 4e), in particular bungee cords, and preferably are formed entirely by rubber cords (4a, 4b, 4c, 4d, 4e), in particular bungee cords.

8. Device according to one of claims 1 to 7, **characterized in that** the at least one actuator is formed by at least one gear motor (8) that for operative connection between the at least one gear motor (8) and the second end region (7) of the at least one elastic element (4e), in each case, a belt (11) is attached to the second end region (7) of the relevant elastic element (4e), and a spool (12), which is connected to the at least one gear motor (8) and can be driven by it in order to wind the relevant belt (11) onto the relevant spool (12) and/or to unwind it from said spool, is provided for the relevant belt (11).

9. Device according to one of claims 1 to 8, **characterized in that** adjustment elements are provided in order to be able to set a length of the elastic elements (4a, 4b, 4c, 4d, 4e), preferably manually, where the adjustment elements are preferably provided only for those elastic elements (4a, 4b, 4c, 4d) that are not in operative connection to the at least one actuator (8).

10. Device according to one of claims 1 to 9, **characterized in that** at least one distance sensor (16) is provided as at least one position sensor in order to determine, in the operating state, a distance (18) to at least one fixed point (17) and thus to be able to detect an incorrect position of the base element (2) and/or of the load (10), where preferably three distance sensors (16) are provided.

11. Device according to one of claims 1 to 10, **characterized in that** a speed, with which, in the operating state, the vertical position (9) of the second end region (7) of the at least one elastic element (4e) can be changed, can be controlled and regulated with the regulating and control unit.

12. Device according to one of claims 1 to 11, **characterized in that** at least one vibration sensor (19) is provided in order to be able to detect, in the operating state, vibrations of the base element (2) and/or of the load (10), and that at least one additional actuator is provided, especially one formed by a moving coil (20), the at least one additional actuator being disposed between at least one fixed point (17) and the base element (2) and being connected to them, in order to compensate the detected vibrations of the base element (2) and/or of the load (10).

13. System comprising a load (10), which is suspended on the at least one support element (1) by means of a device according to one of claims 1 to 12.

14. System according to claim 13, **characterized in that** the elastic elements are formed by rubber cords (4a, 4b, 4c, 4d, 4e), in particular bungee cords, where in each group (5a, 5b), at least one rubber cord (4a, 4b, 4c, 4d) runs so that it includes an angle (21) with the vertical line (15) which is not equal to 0°, preferably an angle (21) in the range of 3° to 30°.

## Revendications

1. Dispositif pour la suspension isolant les oscillations d'une charge (10) à au moins un élément de support (1), lequel dispositif comprend un corps de base (2) pour recevoir la charge (10), le corps de base (2) comportant plusieurs zones de fixation (3a, 3b) pour la fixation d'éléments élastiques (4a, 4b, 4c, 4d, 4e), lesquels éléments élastiques (4a, 4b, 4c, 4d, 4e) comportent chacun une première partie d'extrémité (6) et une deuxième partie d'extrémité (7) et sont fixés par la première partie d'extrémité (6) au corps de base (2), la deuxième partie d'extrémité (7) de chaque élément élastique (4a, 4b, 4c, 4d, 4e) étant conçue pour attacher celui-ci à l'au moins un élément de support (1), une unité de régulation et de commande et au moins un actionneur (8) étant prévus, l'unité de régulation et de commande étant conçue de façon à réguler, dans un état de fonctionnement du dispositif, une position, pouvant de préférence être prédéterminée, du corps de base (2) et/ou de la charge (10), **caractérisé en ce que** l'au moins un actionneur (8) est en liaison active avec la deuxième partie d'extrémité (7) d'au moins un élément élastique (4e) pour pouvoir ajuster une position verticale (9) de la deuxième partie d'extrémité (7) de cet au moins un élément élastique (4e), au moins un capteur de position (16), de préférence à induction, étant prévu pour déterminer la position du corps de base (2) et/ou de la charge (10) en traitant des signaux de mesure de l'au moins un capteur de position au moyen de l'unité de régulation et de commande, trois capteurs de position (16) étant de préférence prévus.

2. Dispositif selon la revendication 1, **caractérisé en ce qu'**est prévu pour chaque zone de fixation (3a, 3b) un groupe (5a, 5b) comprenant plusieurs des éléments élastiques (4a, 4b, 4c, 4d, 4e) afin de relier la zone de fixation (3a, 3b) en question à l'au moins un élément de support (1) et **en ce que** l'au moins un actionneur (8) est en liaison active avec la deuxième partie d'extrémité (7) d'au moins un élément élastique (4e) d'au moins un des groupes (5a, 5b).

3. Dispositif selon la revendication 2, **caractérisé en ce que** plusieurs actionneurs (8) sont prévus pour plusieurs groupes, de préférence pour au moins trois groupes, de préférence pour tous les groupes (5a, 5b).

4. Dispositif selon l'une des revendications 2 à 3, **caractérisé en ce que**, au moins pour un des groupes, de préférence pour au moins trois groupes, en particulier chacun des groupes, un nombre d'éléments élastiques (4e) de ce groupe (5a, 5b) en liaison active avec l'au moins un actionneur (8) est plus petit que le nombre total d'éléments élastiques (4a, 4b, 4c, 4d, 4e) de ce groupe (5a, 5b).

5. Dispositif selon la revendication 4, **caractérisé en ce que** le nombre est un au maximum.

6. Dispositif selon l'une des revendications 1 à 5, **caractérisé en ce que** les éléments élastiques (4a, 4b, 4c, 4d, 4e) sont conçus de manière à avoir un comportement dissipatif.

7. Dispositif selon la revendication 6, **caractérisé en ce que** les éléments élastiques comprennent des cordes en caoutchouc (4a, 4b, 4c, 4d, 4e), en particulier des cordes de saut à l'élastique, et sont de préférence entièrement formés de cordes en caoutchouc (4a, 4b, 4c, 4d, 4e), en particulier de cordes de saut à l'élastique.

8. Dispositif selon l'une des revendications 1 à 7, **caractérisé en ce que** l'au moins un actionneur est formé par au moins un moteur à engrenage (8), **en ce que**, en vue de la liaison active entre l'au moins un moteur à engrenage (8) et la deuxième partie d'extrémité (7) de l'au moins un élément élastique (4e), une bande (11) est fixée à la deuxième partie d'extrémité (7) de l'élément élastique (4e) en question et **en ce qu'**est prévue pour la bande (11) en question une bobine (12) qui est reliée à l'au moins un moteur à engrenage (8) et peut être entraînée par celui-ci pour enrouler la bande (11) en question sur la bobine (12) correspondante et/ou la dérouler de celle-ci.

9. Dispositif selon l'une des revendications 1 à 8, **caractérisé en ce que** des éléments d'ajustement sont prévus pour pouvoir régler la longueur des éléments élastiques (4a, 4b, 4c, 4d, 4e), de préférence manuellement, les éléments d'ajustement n'étant de préférence prévus que pour les éléments élastiques (4a, 4b, 4c, 4d) qui ne sont pas en liaison active avec l'au moins un actionneur (8).

10. Dispositif selon l'une des revendications 1 à 9, **caractérisé en ce qu'**au moins un capteur de distance (16) est prévu comme capteur de position afin de pouvoir déterminer, dans l'état de fonctionnement, une distance (18) par rapport à au moins un point fixe (17) et ainsi constater une erreur de position du corps de base (2) et/ou de la charge (10), trois capteurs de distance (16) au moins étant de préférence prévus.

11. Dispositif selon l'une des revendications 1 à 10, **caractérisé en ce que** l'unité de régulation et de commande peut contrôler et réguler une vitesse à laquelle la position verticale (9) de la deuxième zone d'extrémité (7) de l'au moins un élément élastique (4e) peut être modifiée dans l'état de fonctionnement.

12. Dispositif selon l'une des revendications 1 à 11, **caractérisé en ce qu'**au moins un capteur d'oscillations (19) est prévu, afin de pouvoir détecter, dans l'état de fonctionnement, des oscillations du corps de base (2) et/ou de la charge (10), et **en ce qu'**est prévu au moins un actionneur supplémentaire, en particulier formé par une bobine oscillante (20), qui est disposé entre au moins un point fixe (17) et le corps de base (2) et relié à ceux-ci, afin de compenser les oscillations détectées du corps de base (2) et/ou de la charge (10).

13. Système comprenant une charge (10) qui est suspendue à l'au moins un élément de support (1) au moyen d'un dispositif selon l'une des revendications 1 à 12.

14. Système selon la revendication 13, **caractérisé en ce que** les éléments élastiques sont formés par des cordes en caoutchouc (4a, 4b, 4c, 4d, 4e), en particulier des cordes de saut à l'élastique, au moins une corde de caoutchouc (4a, 4b, 4c, 4d) de chaque groupe (5a, 5b) passant de façon à former avec la verticale (15) un angle (21) différent de 0°, de préférence un angle (21) compris entre 3° et 30°.
